# EUROPEAN PATENT SPECIFICATION

(11) **EP 2 878 782 B1**
(45) Date of publication and mention of the grant of the patent: **07.12.2016**
(21) Application number: 13809769.6
(22) Date of filing: 20.06.2013
(51) Int. Cl.: F01N 3/20, F01N 3/08, F01N 3/18, F01N 3/24, F01N 3/28

(54) **EXHAUST PURIFICATION DEVICE OF INTERNAL COMBUSTION ENGINE**
ABGASREINIGUNGSVORRICHTUNG EINES VERBRENNUNGSMOTORS
DISPOSITIF DE PURIFICATION DE GAZ D'ÉCHAPPEMENT D'UN MOTEUR À COMBUSTION INTERNE

(30) Priority: 28.06.2012 JP 2012145671
(43) Date of publication of application: 03.06.2015
(73) Proprietor: Bosch Corporation, Tokyo 150-8360 (JP)
(72) Inventor: TANIOKA Kenichi, Higashimatsuyama-shi Saitama 355-8603 (JP)
(74) Representative: Isarpatent
(86) International application number: PCT/JP2013/066940
(87) International publication number: WO 2014/002866

(56) References cited:
- EP-A1- 1 129 278
- EP-A2- 2 225 443
- JP-A- H11 229 859
- JP-A- 2003 529 699
- JP-A- 2004 052 555
- JP-A- 2009 138 626
- JP-A- 2011 226 293
- JP-A- 2012 082 703

## Description

### Technical Field

The present invention relates to an abnormal diagnosis device for diagnosing abnormality of an exhaust gas purification device of an internal combustion engine including a first catalyst and a second catalyst having a function which selectively purifies nitrogen oxide (NOₓ) of exhaust gas using ammonia, and an exhaust gas purification device of an internal combustion engine including the abnormal diagnosis device.

### Background Art

In the related art, as an exhaust gas purification device for purifying exhaust gas exhausted from an internal combustion engine which is mounted on a vehicle or the like, an exhaust gas purification device comes into practical use, which includes a selection reduction catalyst which has a function adsorbing ammonia and makes NOₓ included in exhaust gas flowing into the purification device selectively react with the ammonia to purify the exhaust gas, and a reducing agent supply device which supplies a liquid reducing agent derived from ammonia into an exhaust gas passageway at the upstream side of the selection reduction catalyst.

In the exhaust gas purification device of an internal combustion engine, there is an abnormal diagnosis device which diagnoses presence or absence of abnormality of the exhaust gas purification device by determining whether or not an NOₓ purification rate at a current exhaust gas purification device is decreased (refer to PTL 1).

In this abnormal diagnosis device, when the NOₓ purification rate is decreased even though a supply amount of the liquid reducing agent is appropriate, abnormality of the selection reduction catalyst is estimated, and thus, exchange or the like of the selection reduction catalyst may be promoted to a drive or the like.

### Citation List

### Patent Literature

PTL 1: JP-A-2011- 226293

### Summary of Invention

### Technical Problem

As an aspect of the above-described exhaust gas purification device, there is an exhaust gas purification device including an ammonia slip catalyst on an exhaust gas passageway at the downstream side of the selection reduction catalyst. The ammonia slip catalyst has a function which adsorbs the ammonia flowing out from the selection reduction catalyst and reduces the NOₓ which cannot be reduced by the selection reduction catalyst, and a function which oxidizes the ammonia flowing out from the selection reduction catalyst.

The selection reduction catalyst has characteristics in which a maximum adsorption amount of the ammonia is decreased as a catalyst temperature is increased, and the ammonia slip catalyst is provided so as not to discharge the ammonia which cannot be adsorbed by the selection reduction catalyst or the ammonia which cannot react with the NOₓ to the atmosphere. Particularly, effects of the ammonia slip catalyst are effectively exerted at a high load operation state in which the catalyst temperature is high.

In the exhaust gas purification device, during a low load operation in which the exhaust gas temperature is relatively low, a control which purifies the NOₓ by the upstream side selection reduction catalyst is performed. On the other hand, during a high load operation in which the exhaust gas temperature is relatively high, the maximum adsorption amount of the ammonia is small, and an NOₓ flow rate is large, a control which purifies the NOₓ using the selection reduction catalyst and the lower side ammonia slip catalyst together is performed.

In the exhaust gas purification device including the selection reduction catalyst and the ammonia slip catalyst, an NOₓ purification rate is calculated using NOₓ concentration detected at the upstream side of the selection reduction catalyst and NOₓ concentration detected at the downstream side of the ammonia slip catalyst, and as a result, even when it is understood that the NOₓ purification rate is decreased, there is a problem in that abnormality of the selection reduction catalyst and abnormality of the ammonia slip catalyst cannot be divided. Accordingly, two catalysts should be always exchanged, and thus, there is a concern that an increase of costs may occur.

In consideration of the above-described problems, the inventors compare and review each of the NOₓ purification rates during the high load operation and the low load operation, find that the problems can be solved, and complete the present invention. That is, an object of the present invention is to provide an abnormal diagnosis device which can specify abnormality of a second catalyst, and an exhaust gas purification device of an internal combustion engine including the abnormal diagnosis device.
EP 1 129 278 A1 describes an exhaust purification device that is provided with a low-temperature SCR catalyst, a high-temperature SCR catalyst and a reducing agent supply device comprising a low-temperature duct and a valve.
Moreover, EP 2 225 443 A2 describes an abnormality diagnosis device for diagnosing an abnormality in a SCR catalyst, wherein an abnormality of the SCR catalyst is identified on the basis of a first NOₓ purification rate diagnosis result and a second NOₓ purification rate diagnosis result. The first NOₓ purification rate diagnosis result is obtained when the SCR catalyst is at a high temperature and the second NOₓ purification rate diagnosis result is obtained when the SCR catalyst is at a low temperature.

### Solution to Problem

According to the present invention, there is provided
An exhaust gas purification device with the features of claim 1, and thus, it is possible to solve the above-described problems.

That is, the exhaust gas purification device of the present invention performs the NOₓ purification rate diagnosis at the time of the high load operation and at the time of the low load operation of the internal combustion engine, and the abnormality of the second catalyst is specified based on the diagnostic results. Accordingly, when the abnormality of only the second catalyst occurs, it is possible to exchange only the second catalyst, and thus, the cost can be reduced.

In addition, in the configuration of the exhaust gas purification device of the present invention, the abnormality determination unit may specify the abnormality of the second catalyst when the NOₓ purification rate at the time of the low load operation is a normal range and the NOₓ purification rate at the time of the high load operation is decreased.
If the abnormality of the second catalyst is specified
in this way, it is possible to more accurately specify the abnormality of the second catalyst based on a difference of
the NOₓ purification rates when the second catalyst is used
for purification of NOₓ and when the second catalyst is not
used for the purification of the NOₓ.

In addition, in the configuration of the abnormal diagnosis device of the present invention, the purification rate diagnosis unit may specify when the high load operation of the internal combustion engine is performed or when the low load operation is performed, based on a catalyst temperature and an exhaust gas flow rate, and may perform diagnosis of the NOₓ purification rate at the time of the high load operation and diagnosis of the NOₓ purification rate at the time of the low load operation. If when the high load operation is performed or when the low load operation is performed is specified in this way, it is possible to divide into an operation area in which the second catalyst is used for the purification of the NOₓ and an operation area in which the second catalyst is not used for the purification of the NOₓ.

Therefore, when the abnormality of only the second catalyst occurs, it is possible to exchange only the second catalyst, and thus, cost can be reduced.

### Brief Description of Drawings

[Fig. 1] Fig. 1 is a diagram schematically illustrating an overall configuration of an exhaust gas purification device according to an embodiment of the present invention.
[Fig. 2] Fig. 2 shows diagrams for explaining characteristics of a first catalyst (selection reduction catalyst).
[Fig. 3] Fig. 3 is a block diagram for explaining a configuration of an abnormal diagnosis device according to an embodiment of the present invention.
[Fig. 4] Fig. 4 is a flowchart for explaining an example of an abnormality diagnosis method.

### Description of Embodiments

Hereinafter, an embodiment with respect to an abnormal diagnosis device and an exhaust gas purification device of an internal combustion engine according to the present invention will be specifically described with reference to the drawings.

The same reference numerals in each of the drawings indicate the same components unless otherwise noted particularly, and descriptions thereof are appropriately omitted.

### 1. Overall Configuration of Exhaust Gas Purification Device

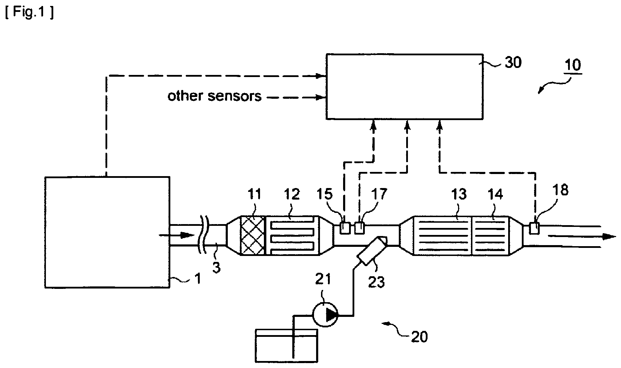

Fig. 1 is a diagram schematically illustrating an exhaust gas purification device 10 of an internal combustion engine including an electronic control device 30 as an abnormal diagnosis device according to the present embodiment.

In Fig. 1, representatively, an internal combustion engine 1 is a diesel engine and includes a plurality of fuel injection valves (not illustrated), and an exhaust pipe 3 through which exhaust gas is circulated is connected to the internal combustion engine. The fuel injection valve is energization-controlled by the electronic control device (hereinafter, referred to as an "Electronic Control Unit (ECU)") 30, and the ECU 30 calculates a fuel injection amount based on an engine speed, an accelerator pedal operation quantity, or other information, obtains energization timing and an energization time of the fuel injection valve based on the calculated fuel injection amount, and performs an energization control of the fuel injection valve.

The exhaust gas purification device 10 is provided on the exhaust pipe 3 which is connected to the internal combustion engine 1. The exhaust gas purification device 10 includes an oxidation catalyst 11, a particulate filter 12, a first catalyst 13, and a second catalyst 14 in this order from the upstream side of the exhaust pipe 3. In addition, the exhaust gas purification device 10 includes an exhaust gas temperature sensor 15 and an upstream side NOₓ concentration sensor 17 at the upstream side of the first catalyst 13, and a downstream side NOₓ concentration sensor 18 at the downstream side of the second catalyst 14. Sensor signals of the sensors are input to the ECU 30.

The oxidation catalyst 11 is provided to oxidize NO in the exhaust gas exhausted from the internal combustion engine 1 and convert the NO into NO₂. When a ratio between the NO and the NO₂ is 1:1, reaction between ammonia and the NOₓ on the first catalyst 13 or the second catalyst 14 is most efficiently performed. Moreover, the oxidation catalyst 11 may also have a function which oxidizes (combusts) HC or CO included in the exhaust gas in an active state. This is because the oxidation catalyst generates oxidation heat during a regeneration control of the particulate filter 12 and increases the exhaust gas temperature. The oxidation catalyst 11 which can be used is not particularly limited if the catalyst is a known diesel oxidation catalyst or the like.

The particulate filter 12 is a filter having a function which collects particulates (hereinafter, referred to as "Particulate Material (PM)") such as soot included in the exhaust gas exhausted from the internal combustion engine 1. Representatively, as the particulate filter 12, a filter having a honeycomb structure is used. However, the particulate filter is not limited to the filter having a honeycomb structure.

The first catalyst 13 is a catalyst which selectively reduces NOₓ included in the exhaust gas, using a liquid reducing agent which is supplied by a reducing agent supply device 20 configured of a pump 21, a reducing agent injection valve 23, or the like. In the present embodiment, the liquid reducing agent supplied from the reducing agent supply device 20 is urea water solution, and ammonia, which is decomposed from the urea water solution and is generated, is adsorbed to the first catalyst 13 and functions as a reducing agent reacting with the NOₓ.

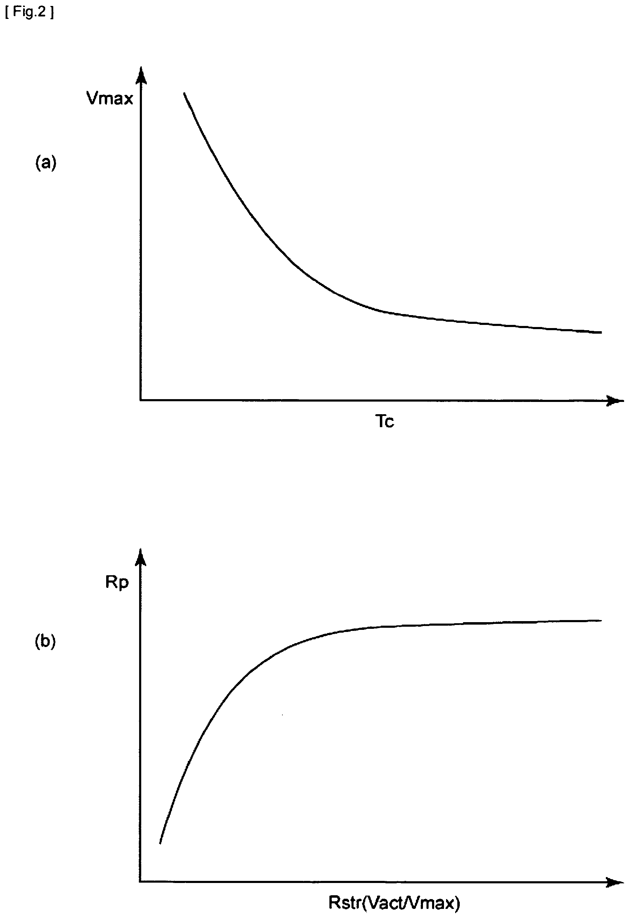

Here, Figs. 2 (a) and 2 (b) illustrate characteristics of the first catalyst 13. Fig. 2(a) illustrates a relationship between a catalyst temperature Tc and a maximum adsorption amount Vmax of ammonia, and Fig. 2(b) illustrates a relationship between an actual adsorption rate Rstr (Vact / Vmax) with respect to the maximum adsorption amount of the ammonia and a purification rate Rp of the NOₓ.

As illustrated in Fig. 2(a), the maximum adsorption amount Vmax of the ammonia in the first catalyst 13 is changed by the catalyst temperature Tc. That is, the first catalyst 13 has characteristics in which the maximum adsorption amount Vmax of the ammonia is decreased as the catalyst temperature Tc is increased. In addition, as illustrated in Fig. 2(b), the first catalyst 13 has characteristics in which the purification rate Rp of the NOₓ is increased as the adsorption rate Rstr of the ammonia is increased.

Accordingly, in the exhaust gas purification device 10 according to the present embodiment, an injection amount of the liquid reducing agent is adjusted so that the actual adsorption rate Rstr of the ammonia is approximately 80%, for example, while the temperature Tc1 of the first catalyst 13 is monitored and the maximum adsorption amount Vmax1 of the ammonia is changed. The reason why the target of the adsorption rate cannot be set to nearly 100% is because there is a concern that the maximum adsorption amount Vmax may be decreased when the temperature Tc1 of the first catalyst 13 is increased and the ammonia may flow to the downstream side of the first catalyst 13.

The second catalyst 14 is provided to adsorb the ammonia which cannot be adsorbed by the first catalyst 13 so that the ammonia is not discharged into the atmosphere. That is, the second catalyst 14 is a catalyst having at least an NOₓ reduction function similar to the first catalyst 13. In the present embodiment, an ammonia slip catalyst is used as the second catalyst 14, and the second catalyst 14 has an ammonia oxidation function along with the NOₓ reduction function. In addition, in the present embodiment, the second catalyst 14 is used in which the capacity, that is, the volume is smaller than the capacity of the first catalyst 13.

Particularly, the second catalyst 14 functions during a high load operation of the internal combustion engine 1 in which the maximum adsorption amount Vmax1 of the ammonia in the first catalyst 13 is decreased and NOₓ concentration Nu in the exhaust gas is increased. That is, in the exhaust gas purification device 10 of the internal combustion engine according to the present embodiment, the control which purifies the NOₓ in the exhaust gas using not only the first catalyst 13 but also the second catalyst 14 is performed during the high load operation of the internal combustion engine 1 while the control which purifies the NOₓ in the exhaust gas using the first catalyst 13 is performed during the low load operation of the internal combustion engine 1.

The upstream side NOₓ concentration sensor 17 corresponds to upstream side NOₓ concentration detection means. However, instead of using the NOₓ sensor, the upstream side NOₓ concentration Nu may be estimated by calculation using the ECU 30 based on the operation condition of the internal combustion engine 1. Moreover, the value of the upstream side NOₓ concentration sensor 17 may be corrected by NO₂/NO ratio, the value of the exhaust gas pressure, or the like.

The downstream side NOₓ concentration sensor 18 corresponds to a downstream side NOₓ concentration detection means, and is provided to detect NOₓ concentration Nd in the downstream side of the second catalyst 14, that is, the NOₓ concentration which cannot be purified by the first catalyst 13 and the second catalyst 14. The information of the NOₓ concentration Nd detected by the downstream side NOₓ concentration sensor 18 is mainly used for correction of the injection amount of the liquid reducing agent. However, in the abnormal diagnosis device according to the present embodiment, the information is also used for the diagnosis of the NOₓ purification rate.

### 2. Electronic Control Device (Abnormal Diagnosis Device)

### (1) Schematic Configuration

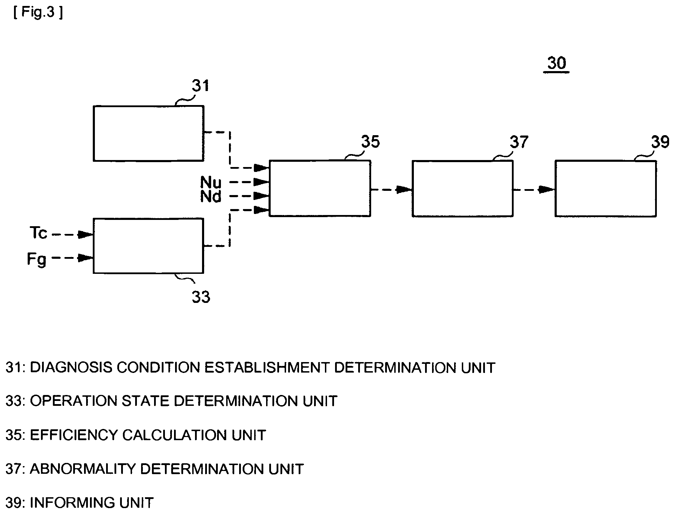

Fig. 3 indicates portions related to the abnormality diagnosis in the configurations of the ECU 30 by functional blocks. The ECU 30 includes a function as the abnormal diagnosis device.

The ECU 30 is mainly configured of the well-known microcomputer, and includes a diagnosis condition establishment determination unit 31, an operation state determination unit 33, a purification rate diagnosis unit 35, an abnormality determination unit 37, and an informing unit 39. Specifically, each unit configuring the ECU 30 is achieved by executing programs of a microcomputer.

Moreover, the ECU 30 includes a storage unit (not illustrated) configured of a storage element such as a RAM or a ROM. A control program and various calculation maps are stored in the storage unit in advance, and calculation results or the like by each of the above-described units are written in the storage unit.

The diagnosis condition establishment determination unit 31 discriminates whether or not the state of a current exhaust gas purification device 10 is in a state capable of executing purification rate diagnosis. A diagnosis condition includes at least a condition in which the supply amount of the liquid reducing agent by the reducing agent supply device 20 is normal. This is because when the supply amount of the liquid reducing agent is not normal, there is a concern that the NOₓ purification rate may be decreased, and it is difficult to determine abnormality of the first catalyst 13 or the second catalyst 14. For example, whether or not this condition is established can be discriminated by viewing whether or not the pump 21 and the reducing agent injection valve 23 of the reducing agent supply device 20 are error states and whether or not abnormality due to freeze or the like of the liquid reducing agent is detected.

As other diagnosis conditions, there is a condition in which the temperature Tcl of the first catalyst 13 and the temperature Tc2 of the second catalyst 14 which are estimated from the exhaust gas temperature Tf detected by the exhaust gas temperature sensor 15 are equal to or more than a catalyst activating temperature, or the like. However, the diagnosis condition is not limited to this, and may be set to an appropriate diagnosis condition.

The operation state determination unit 33 discriminates whether or not the internal combustion engine 1 is in the high load operation state or the low load operation state. In the present embodiment, the high load operation state and the low load operation state are discriminated with reference to map information based on the temperature Tc1 of the first catalyst 13, the temperature Tc2 of the second catalyst 14, and an exhaust gas flow rate Fg. Specifically, ranges of the catalyst temperature Tc1 (Tc2) and the exhaust gas flow rate Fg in each operation area of the high load operation state and the low load operation state are set in advance, and when current catalyst temperatures Tc1 (Tc2) and the exhaust gas flow rate Fg are within the ranges, the state is discriminated as the high load operation state or the low load operation state.

Alternatively, instead of using the map, simply, the following method may be performed. That is, when the catalyst temperature Tc1 (Tc2) is a low temperature (for example, 250°C to 350°C) and the exhaust gas flow rate Fg is small, the state is discriminated as the low load operation state, and when the catalyst temperature Tc1 (Tc2) is a high temperature (for example, 400°C to 500°C) and the exhaust gas flow rate Fg is large, the state is discriminated as the high load operation state.

The catalyst temperature Tc1 (Tc2) is a value which is estimated by calculation based on the exhaust gas temperature Tg detected by the exhaust gas temperature sensor 15. However, simply, the operation state may be discriminated using the exhaust gas temperature Tg itself. In addition, the exhaust gas flow rate Fg is a value which is obtained by calculation based on the operation condition of the internal combustion engine 1 such as an engine speed Ne.

Moreover, hereinafter, in the present embodiment, the temperature Tc1 of the first catalyst 13 is used as the catalyst temperature Tc.

When the diagnosis condition is established and the internal combustion engine 1 is in the high load operation state or the low load operation state, the purification rate diagnosis unit 35 performs the diagnosis of the NOₓ purification rate Rp of the current exhaust gas purification device 10. For example, this diagnosis is performed by comparing a first NOₓ purification rate Rp1 calculated based on the upstream side NOₓ concentration Nu and the downstream side NOₓ concentration Nd, and a second NOₓ purification rate Rp2 which is assumed based on the conditions.

The first NOₓ purification rate Rp1 can be obtained by a decreased rate of the NOₓ concentration ((Nu-Nd)/Nu) by comparing the upstream side NOₓ concentration Nu and the downstream side NOₓ concentration Nd. In addition, for example, the second NOₓ purification rate Rp2 can be calculated based on the value of the catalyst temperature Tc1 of the first catalyst 13, an estimated adsorption amount (actual adsorption amount) Vact of the ammonia, the exhaust gas flow rate Fg, the upstream side NOₓ concentration Nu, the NO₂/NO rate in the NOₓ, or the like. However, the method for obtaining the second NOₓ purification rate Rp2 is not limited to the example, and other methods may be used.

The first NOₓ purification rate Rp1 is an actual value which is obtained using the upstream side NOₓ concentration Nu and the downstream side NOₓ concentration Nd, and the second NOₓ purification rate Rp2 is an assumed value of the NOₓ purification rate Rp which is estimated from the operation condition of the current internal combustion engine 1 or the state of the exhaust gas purification device 10. Accordingly, when the first actual NOₓ purification rate Rp1 is significantly lower than the assumed second NOₓ purification rate Rp2, it can be determined that abnormality of the NOₓ purification rate Rₚ occurs.

The abnormality determination unit 37 discriminates presence or absence of the abnormality of the first catalyst 13 and the abnormality of the second catalyst 14 based on the diagnostic result of the NOₓ purification rate Rp at the high load operation state and the diagnostic result of the NOₓ purification rate Rp at the low load operation state which are obtained by the purification rate diagnosis unit 35. Particularly, the ECU (abnormal diagnosis device) 30 according to the present embodiment is configured to specify the failure of only the second catalyst 14.

The abnormality determination by the abnormality determination unit 37 is performed based on the following concept. That is, the purification of the NOₓ is performed using not only the first catalyst 13 but also the second catalyst 14 at the high load operation state of the internal combustion engine 1 while the purification of the NOₓ is performed using only the first catalyst 13 at the low load operation state of the internal combustion engine 1. Accordingly, when the NOₓ purification rate Rp at the high load operation state is decreased while the NOₓ purification rate Rp at the low load operation state is appropriate, it is specified that the second catalyst 14 is abnormal.

### (2) Flowchart

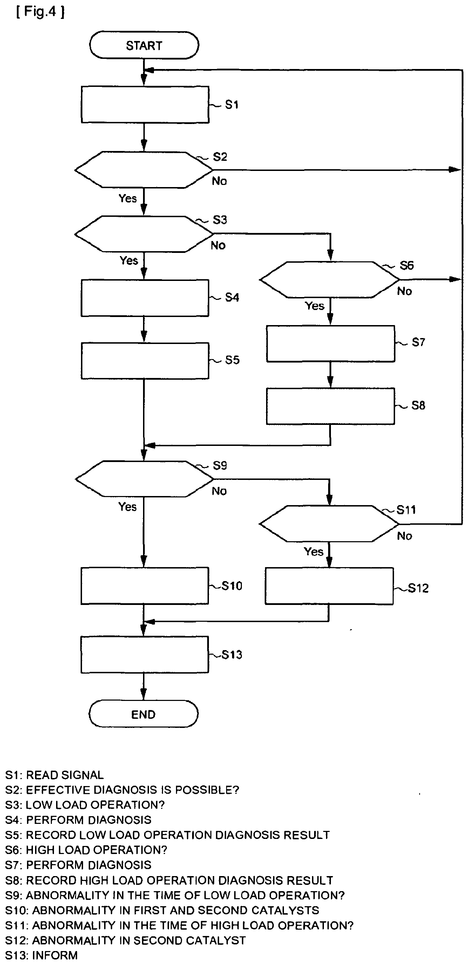

Next, a specific example of an abnormality diagnosis method of the exhaust gas purification device 10 performed by the ECU 30 which is the abnormal diagnosis device according to the present embodiment will be described with reference to a flowchart of Fig. 4. A routine of the abnormality diagnosis method described below is performed by interruption always or for each predetermined cycle during the operation of the internal combustion engine 1.

First, in Step S1, the ECU 30 reads information related to sensor signals of the exhaust gas temperature sensor 15, the upstream side NOₓ concentration sensor 17, the downstream side NOₓ concentration sensor 18, or the like, the operation condition of the internal combustion engine 1, the abnormality diagnostic result of the reducing agent supply device 20, or the like.

Next, in Step S2, the ECU 30 discriminates whether the state of the current exhaust gas purification device 10 is in a state at which the NOₓ purification rate diagnosis can be performed, based on the information read in Step S1. As exemplified above, here, it is discriminated whether or not the purification rate diagnosis can be performed by discriminating whether or not the supply amount of the liquid reducing agent by the reducing agent supply device 20 is normal, whether or not the catalyst temperature Tc1 is equal to or more than the catalyst activating temperature, or the like.

When No is determined in Step S2, it is returned to Step S1, and when Yes is determined in Step S2, it proceeds to Step S3, and the ECU 30 discriminates whether or not the internal combustion engine 1 is in the low load operation state. In the present embodiment, it is discriminated whether or not the internal combustion engine 1 is in the low load operation state based on the catalyst temperature Tc1 and the exhaust gas flow rate Fg.

When Yes is determined in Step S3, that is, when the internal combustion engine 1 is in the low load operation state, it proceeds to Step 4, and the NOₓ purification rate diagnosis is performed. For example, the NOₓ purification rate diagnosis is performed by comparing the first NOₓ purification rate Rp1 which is the actual value obtained based on values of the upstream side NOₓ concentration Nu and the downstream side NOₓ concentration Nd and the second NOₓ purification rate Rp2 which is the assumed value estimated from the operation condition of the internal combustion engine 1 or the state of the exhaust gas purification device 10, and by determining whether or not the actual NOₓ purification rate is decreased. When the first NOₓ purification rate Rp1 is lower by a predetermined value than the second NOₓ purification rate Rp2, it may be determined that the NOₓ purification rate is abnormal, and when the first NOₓ purification rate Rp1 is lower by a predetermined rate than the second NOₓ purification rate Rp2, it may be determined that the NOₓ purification rate is abnormal.

After the NOₓ purification rate diagnosis in Step S4 ends, it proceeds to Step S5, and the diagnostic result is recorded. The diagnostic result recorded at this time is recorded as the diagnostic result of the NOₓ purification rate at the time of the low load operation.

Meanwhile, when No is determined in the above-described Step S3, that is, when the internal combustion engine 1 is not in the low load operation state, it proceeds to Step S6, and the ECU 30 discriminates whether or not the internal combustion engine 1 is in the high load operation state. In the present embodiment, it is discriminated whether or not the internal combustion engine 1 is in the high load operation state based on the catalyst temperature Tc1 and the exhaust gas flow rate Fg.

When No is determined in Step S6, since the internal combustion engine 1 is not in the low load operation state and the high load operation state, the NOₓ purification rate diagnosis is not performed, and it is returned to Step S1. Meanwhile, when Yes is determined in Step S6, that is, when the internal combustion engine 1 is in the high load operation state, it proceeds to Step S7, and the NOₓ purification rate diagnosis is performed according to the procedure similar to Step S4. Moreover, when the NOₓ purification rate diagnosis ends, it proceeds to Step S8, and the diagnosis result is recorded. The diagnostic result recorded at this time is recorded as the diagnostic result of the NOₓ purification rate at the time of the high load operation.

After the result of the NOₓ purification rate diagnosis at the low load operation state is recorded in Step S5 or the NOₓ purification rate diagnosis at the high load operation state is recorded in Step S8, it proceeds to Step 9, and the ECU 30 discriminates whether or not the NOₓ purification rate of the low load operation state is abnormal. When Yes is determined in Step S9, since an NOₓ purification function in the first catalyst 13 may be insufficient, or a function of the second catalyst 14 which adsorbs the ammonia flowing out from the first catalyst 13 and purifies the NOₓ may be insufficient, it proceeds to Step S10, and it is discriminated whether or not the first catalyst 13 and the second catalyst 14 are abnormal.

When No is determined in Step S9, it proceeds to Step S11, and the ECU 30 discriminates whether or not the NOₓ purification rate in the high load operation state is abnormal. When Yes is determined in Step S11, since abnormality of the NOₓ purification rate occurs only in the high load operation state, it is determined that the second catalyst 14 is abnormal. On the other hand, when No is determined in Step S11, since the abnormality of the NOₓ purification rate does not occur either in the low load operation state or in the high load operation state, the current exhaust gas purification device 10 is not abnormal, and thus, it is returned to Step S1 as it is.

After it is determined that the first catalyst 13 and/or the second catalyst 14 is abnormal in Step S10 or Step 12, it proceeds to Step S13, the ECU 30 operates an alarm lamp, alarm sound, or the like and notifies the abnormality determination result of the catalyst to a driver or the like, the exchange of the catalyst in which the exchange is required is promoted, the present routine ends, and it is returned to a main routine (not illustrated).

### 3. Effect of the Present Embodiment

As described above, in the abnormal diagnosis device 30 according the present embodiment and the exhaust gas purification device 10 including the abnormal diagnosis device, the diagnostic result of the NOₓ purification rate Rp in the low load operation state of the internal combustion engine 1 and the diagnostic result of the NOₓ purification rate Rp in the high load operation state are obtained, based on the diagnostic results, it is specified whether or not the first catalyst 13 and the second catalyst 14 are abnormal, or whether or not only the second catalyst 14 is abnormal. Accordingly, when only the second catalyst 14 is abnormal, only the second catalyst can be exchanged, and thus, it is possible to reduce the cost.

Moreover, in the abnormal diagnosis device 30 according the present embodiment and the exhaust gas purification device 10 including the abnormal diagnosis device, when the diagnostic result of the NOₓ purification rate Rp at the time of the low load operation is not abnormal and the diagnostic result of the NOₓ purification rate Rp at the time of the high load operation is abnormal, it is specified that the second catalyst 14 is abnormal. Accordingly, based on the difference of the NOₓ purification rates Rp when the second catalyst 14 is used and when the second catalyst 14 is not used, it is possible to accurately specify the abnormality of the second catalyst 14.

In addition, in the abnormal diagnosis device 30 according to the present embodiment and the exhaust gas purification device 10 including the abnormal diagnosis device, when the high load operation of the internal combustion engine 1 is performed and when the low load operation of the internal combustion engine 1 is performed are specified based on the catalyst temperature Tc1 and the exhaust gas flow rate Fg, and the NOₓ purification rate diagnosis is performed. Accordingly, it is possible to easily divide into the operation area in which the second catalyst 14 is used for the NOₓ purification and the operation area in which the second catalyst 14 is not used for the NOₓ purification.

### 4. Modification

The abnormal diagnosis device 30 and the exhaust gas purification device 10 of the internal combustion engine according to the above-described embodiment are not limited to the above-described examples, and various changes can be performed within a scope of the present invention.

For example, in the flowchart of the above-described abnormality diagnosis method, whether or not the internal combustion engine 1 is in the low load operation state is discriminated previously. However, whether or not the internal combustion engine is in the high load operation state may be discriminated previously.

Moreover, in the flowchart of the above-described abnormality diagnosis method, in Step S9 and Step S11, if the abnormality of the NOₓ purification rate Rp is recorded even once as the result of the NOₓ purification rate diagnosis at the low load operation state and the result of the NOₓ purification rate diagnosis at the high load operation state, it is discriminated that abnormality occurs. However, in order to improve diagnosis accuracy, when the abnormality of the NOₓ purification rate Rp is recorded at a predetermined frequency or more, it may be securely discriminated that the abnormality occurs.

In addition, in the present embodiment, the abnormality of the NOₓ purification rate is determined by comparing the first NOₓ purification rate Rp1 which is the actual value obtained based on the upstream side NOₓ concentration Nu and the downstream side NOₓ concentration Nd, and the second NOₓ purification rate Rp2 which is estimated based on the conditions and is the assumed value. However, the diagnosis method of the NOₓ purification rate is not particularly limited.

## Claims

1. An exhaust gas purification device (10), comprising:
a first catalyst (13) which is provided on an exhaust gas passageway (3) of an internal combustion engine (1), and has a function which adsorbs ammonia and selectively purifies NOₓ in exhaust gas using the ammonia;
a second catalyst (14) which is provided on the exhaust gas passageway (3) on a downstream side of the first catalyst (13), and
has a function which adsorbs the ammonia flowing out from the first catalyst (13) and selectively purifies the NOₓ flowing out from the first catalyst (13) using the ammonia;
a reducing agent supply device (20) which supplies a liquid reducing agent derived from the ammonia into the exhaust gas passageway (3) at an upstream side of the first catalyst (13);
upstream side NOₓ concentration detection means (17) for detecting NOₓ concentration at the upstream side of the first catalyst (13);
downstream side NOₓ concentration detection means (18) for detecting NOₓ concentration at the downstream side of the second catalyst (14);
a purification rate diagnosis unit (35) which diagnoses an NOₓ purification rate in the exhaust gas purification device (10),
wherein the NOₓ purification rate is calculated using the NOₓ concentration detected at the upstream side of the first catalyst (13) and the NOₓ concentration detected at the downstream side of the second catalyst (14); and
an abnormality determination unit (37) configured to specify abnormality of the second catalyst (14) based on a diagnostic result of the NOₓ purification rate obtained at the time of a high load operation of the internal combustion engine (1) and a diagnostic result of the NOₓ purification rate obtained at the time of a low load operation of the internal combustion engine (1).

2. The exhaust gas purification device (10) according to claim 1, wherein the abnormality determination unit (37) specifies the abnormality of the second catalyst (14) when the NOₓ purification rate at the time of the low load operation is a normal range and the NOₓ purification rate at the time of the high load operation is decreased.

3. The exhaust gas purification device (10) according to claim 1 or 2,
wherein the purification rate diagnosis unit (35) specifies when the high load operation of the internal combustion engine (1) is performed or when the low load operation is performed, based on a catalyst temperature and an exhaust gas flow rate, and performs diagnosis of the NOₓ purification rate at the time of the high load operation and diagnosis of the NOₓ purification rate at the time of the low load operation.

## Patentansprüche

1. Abgasreinigungsvorrichtung (10), die Folgendes umfasst:
einen ersten Katalysator (13), der in einem Abgasdurchgang (3) eines Verbrennungsmotors (1) angeordnet ist und eine Funktion hat, die Ammoniak adsorbiert und selektiv Stickoxide im Abgas mittels des Ammoniaks reinigt;
einen zweiten Katalysator (14), der in dem Abgasdurchgang (3) auf einer stromabwärtigen Seite des ersten Katalysators (13) angeordnet ist und eine Funktion hat, die das aus dem ersten Katalysator (13) ausströmende Ammoniak adsorbiert und selektiv die aus dem ersten Katalysator (13) ausströmenden Stickoxide mittels des Ammoniaks reinigt;
eine Reduktionsmittel-Zufuhrvorrichtung (20), die ein aus dem Ammoniak gewonnenes flüssiges Reduktionsmittel in den Abgasdurchgang (3) auf einer stromaufwärtigen Seite des ersten Katalysators (13) einleitet;
ein auf der stromaufwärtigen Seite befindliches Stickoxidkonzentrationsdetektionsmittel (17) zum Detektieren der Stickoxidkonzentration auf der stromaufwärtigen Seite des ersten Katalysators (13);
ein auf der stromabwärtigen Seite befindliches Stickoxidkonzentrationsdetektionsmittel (18) zum Detektieren der Stickoxidkonzentration auf der stromabwärtigen Seite des zweiten Katalysators (14);
eine Reinigungsratendiagnoseeinheit (35), die eine Stickoxidreinigungsrate in der Abgasreinigungsvorrichtung (10) diagnostiziert, wobei die Stickoxidreinigungsrate anhand der Stickoxidkonzentration, die auf der stromaufwärtigen Seite des ersten Katalysators (13) detektiert wird, und anhand der Stickoxidkonzentration, die auf der stromabwärtigen Seite des zweiten Katalysators (14) detektiert wird, berechnet wird; und
eine Anomaliebestimmungseinheit (37), die dafür konfiguriert ist, eine Anomalie des zweiten Katalysators (14) auf der Basis eines Diagnoseergebnisses der Stickoxidreinigungsrate, die zur Zeit eines Hochlastbetriebes des Verbrennungsmotors (1) erhalten wurde, und auf der Basis eines Diagnoseergebnisses der Stickoxidreinigungsrate, die zur Zeit eines Niedriglastbetriebes des Verbrennungsmotors (1) erhalten wurde, zu spezifizieren.

2. Abgasreinigungsvorrichtung (10) nach Anspruch 1, wobei die Anomaliebestimmungseinheit (37) die Anomalie des zweiten Katalysators (14) spezifiziert, wenn die Stickoxidreinigungsrate zur Zeit des Niedriglastbetriebes ein normaler Bereich ist und die Stickoxidreinigungsrate zur Zeit des Hochlastbetriebes verringert wird.

3. Abgasreinigungsvorrichtung (10) nach Anspruch 1 oder 2, wobei die Reinigungsratendiagnoseeinheit (35) auf der Basis einer Katalysatortemperatur und einer Abgasströmungsrate spezifiziert, wann der Hochlastbetrieb des Verbrennungsmotors (1) ausgeführt wird oder wann der Niedriglastbetrieb ausgeführt wird, und eine Diagnose der Stickoxidreinigungsrate zur Zeit des Hochlastbetriebes und eine Diagnose der Stickoxidreinigungsrate zur Zeit des Niedriglastbetriebes ausführt.

## Revendications

1. Dispositif de purification de gaz d'échappement (10), comprenant :
un premier catalyseur (13) situé sur un passage de gaz d'échappement (3) d'un moteur à combustion interne (1), et dont la fonction est d'adsorber l'ammoniac et de purifier de manière sélective le NOₓ dans le gaz d'échappement au moyen de l'ammoniac ;
un second catalyseur (14) situé sur le passage de gaz d'échappement (3) en aval du premier catalyseur (13), et dont la fonction est d'adsorber l'ammoniac s'écoulant hors du premier catalyseur (13) et de purifier de manière sélective le NOₓ s'écoulant hors du premier catalyseur (13) au moyen de l'ammoniac ;
un dispositif d'apport d'agent réducteur (20), qui apporte un agent réducteur liquide dérivé de l'ammoniac dans le passage de gaz d'échappement (3) en amont du premier catalyseur (13) ;
un moyen de détection de concentration de NOₓ côté amont (17) permettant de détecter la concentration de NOₓ en amont du premier catalyseur (13) ; un moyen de détection de concentration de NOₓ côté aval (18) permettant de détecter la concentration de NOₓ en aval du second catalyseur (14) ;
une unité de diagnostic de taux de purification (35) qui diagnostique un taux de purification de NOₓ dans le dispositif de purification de gaz d'échappement (10), le taux de purification de NOₓ étant calculé au moyen de la concentration de NOₓ détectée en amont du premier catalyseur (13) et de la concentration de NOₓ détectée en aval du second catalyseur (14) ; et
une unité de détermination d'anormalité (37) conçue pour spécifier une anormalité du second catalyseur (14) sur la base d'un résultat de diagnostic du taux de purification de NOₓ obtenu au moment d'un fonctionnement sous forte charge du moteur à combustion interne (1), et d'un résultat de diagnostic du taux de purification de NOₓ obtenu au moment d'un fonctionnement sous faible charge du moteur à combustion interne (1).

2. Dispositif de purification de gaz d'échappement (10) selon la revendication 1, dans lequel l'unité de détermination d'anormalité (37) spécifie l'anormalité du second catalyseur (14) quand le taux de purification de NOₓ au moment du fonctionnement sous faible charge est une plage normale, et le taux de purification de NOₓ au moment du fonctionnement sous forte charge est en baisse.

3. Dispositif de purification de gaz d'échappement (10) selon la revendication 1 ou 2,
dans lequel l'unité de diagnostic de taux de purification (35) spécifie quand le fonctionnement sous forte charge du moteur à combustion interne (1) est effectué ou quand le fonctionnement sous faible charge est effectué, sur la base d'une température de catalyseur et d'un débit de gaz d'échappement, et effectue le diagnostic du taux de purification de NOₓ au moment du fonctionnement sous forte charge, et le diagnostic du taux de purification de NOₓ au moment du fonctionnement sous faible charge.
